# EUROPEAN PATENT APPLICATION

(11) **EP 4 105 085 A1**
(43) Date of publication of application: **21.12.2022**
(21) Application number: 21780570.4
(22) Date of filing: 25.03.2021
(51) Int. Cl.: B60R 22/00, B60R 22/26, B60N 2/90

(54) **SEAT STRUCTURE**

(30) Priority: 31.03.2020 JP 2020063229
(71) Applicant: Delta Kogyo Co., Ltd., Aki-gun, Hiroshima 735-8501 (JP)
(72) Inventor: TAKAMURA, Rina, Aki-gun, Hiroshima 735-8501 (JP); OKUI, Takahiro, Aki-gun, Hiroshima 735-8501 (JP); ONJI, Atsushi, Aki-gun, Hiroshima 735-8501 (JP)
(74) Representative: Rupprecht, Kay
(86) International application number: PCT/JP2021/012552
(87) International publication number: WO 2021/200542

(57) **Abstract**

A seat structure includes a buckle accommodator having a recess shape formed in a seat surface portion of a seat cushion for accommodating a buckle of a seatbelt. The seat structure includes: a cushion pad having a recess part agreeing with the shape of the buckle accommodator; a trim covering a surface of the cushion pad and having a three-dimensionally sewn section along an inner surface of the recess part; and a support member located between the cushion pad and the trim and inside the recess part of the cushion pad. The support member includes a bottom support part along an inner bottom surface of the recess part and a side support part and standing from a peripheral edge of the bottom support part along an inner side surface of the recess part, a whole of the support member being made of material having higher stiffness than the trim.

## Description

### Technical Field

The present invention relates to a seat structure including a buckle accommodator for accommodating a buckle of a seatbelt, the buckle accommodator having a recess shape formed in a seat surface portion of a seat cushion.

### Background Art

An automobile including a rear seat of a bench seat type is configured to, as disclosed in Patent Literature 1, allow a buckle (to be engaged with a tongue plate of a seatbelt) to fit and be accommodated in a recess defined in a seat surface portion of a seat cushion when the seatbelt is not used. The recess is referred to as, for example, a "buckle accommodator". The buckle accommodator is obtainable by covering a surface of a recess part formed in the cushion pad with a trim three-dimensionally sewn along the surface.

The buckle accommodator disclosed in Patent Literature 1 has an inner bottom part made of carpet material to have larger thickness and higher shape keeping performance than other portions of the trim, and thus the inner bottom part is less likely to receive an influence of deformation of the cushion pad. Therefore, the inner bottom part of the buckle accommodator is easily kept flat without wrinkling and further looks attractive.

However, in the buckle accommodator having this structure, a side part surrounding the inner bottom part is likely to wrinkle due to the deformation of the cushion pad while the inner bottom part is kept flat. In this respect, there is still room for improving not only the appearance quality of the buckle accommodator but also the appearance quality of the rear seat.

### Citation List

### Patent Literature

Patent Literature 1: Japanese Unexamined Patent Publication No. 2013-6516

### Summary of Invention

The present invention has been accomplished in view of the aforementioned circumstances, and has an object of improving appearance quality of a buckle accommodator.

The present invention relates to a seat structure including a buckle accommodator for accommodating a buckle of a seatbelt, the buckle accommodator having a recess shape formed in a seat surface portion of a seat cushion. The seat structure includes: a cushion pad having a recess part agreeing with the shape of the buckle accommodator; a trim covering a surface of the cushion pad and having a three-dimensionally sewn section along an inner surface of the recess part; and a support member located between the cushion pad and the trim and inside the recess part of the cushion pad. The support member includes a bottom support part having a plate shape along an inner bottom surface of the recess part and a side support part having a plate shape and standing from a peripheral edge of the bottom support part along an inner side surface of the recess part, a whole of the support member being made of material having higher stiffness than the trim.

### Brief Description of Drawings

Fig. 1 is a perspective view of a rear seat adopting a seat structure according to the present invention
Fig. 2 is a perspective view of the rear seat, excluding illustration of a buckle.
Fig. 3 is a perspective view of a main portion showing a support member of a buckle accommodator.
Fig. 4 is a plan view of the main portion showing the buckle accommodator, excluding illustration of a trim.
Fig. 5 is a cross-sectional view taken along the line V-V in Fig. 4.
Fig. 6 is a cross-sectional view of the buckle accommodator (including the trim) taken along the line VI-VI in Fig. 4.
Fig. 7 is a cross-sectional view of the buckle accommodator (including the trim) taken along the line VII-VII in Fig. 4.

### Description of Embodiments

Hereinafter, a preferable embodiment of the present invention will be described with reference to the accompanying drawings.

### Overall Configuration of Rear Seat

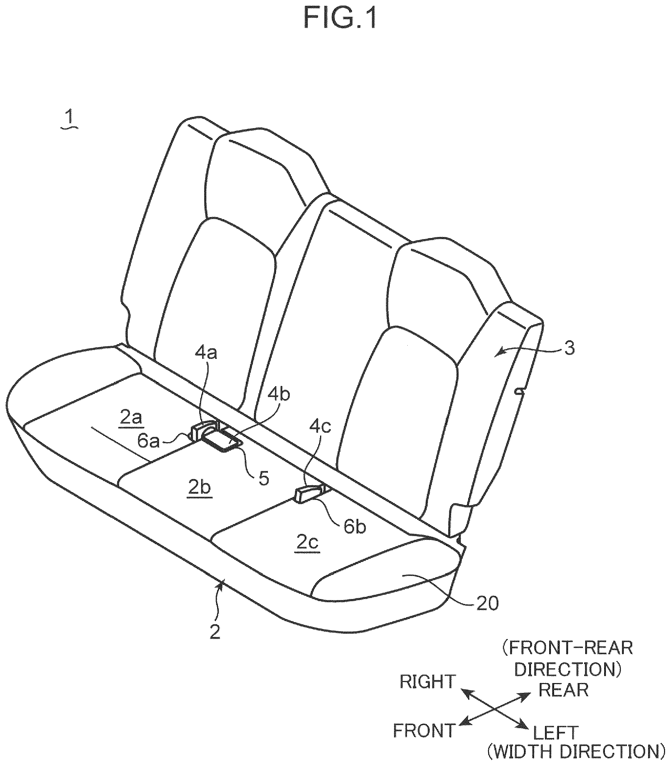

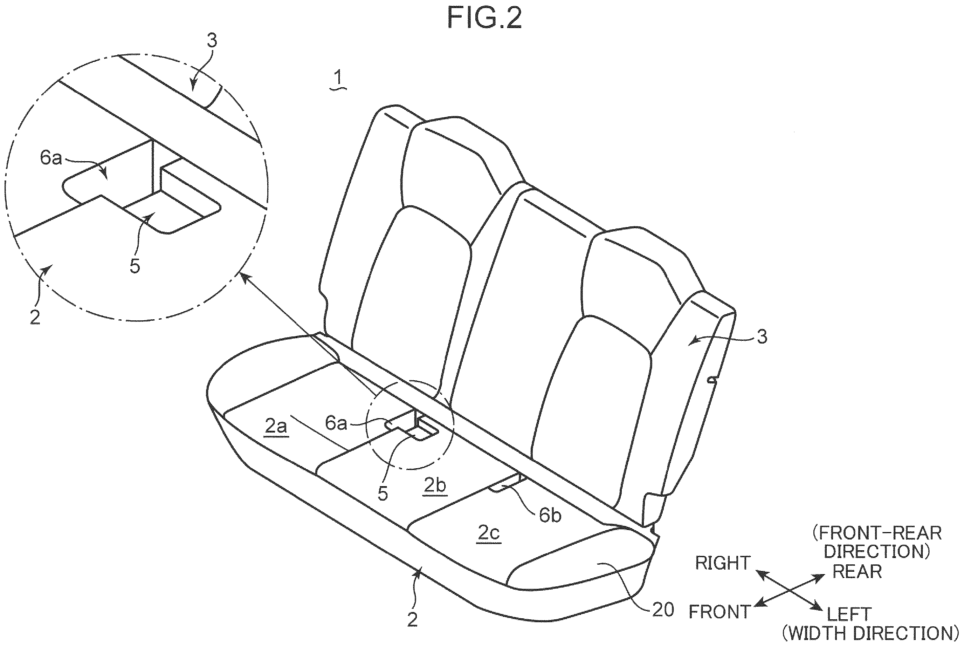

Fig. 1 is a perspective view of a rear seat adopting a seat structure according to the present invention. Fig. 2 is a perspective view of the rear seat, excluding illustration of a buckle of a seatbelt.

The rear seat 1 is applicable to a seat for an automobile, specifically, is applicable to a rear seat in a second or third row in the automobile. However, the seat according to the present invention is not particularly limited to the seat for the automobile, and is applicable to a seat for another vehicle, such as a train.

The rear seat 1 extends in a width direction to allow three people to sit thereon. The width direction corresponds to a width direction of the automobile. Hereinafter, unless otherwise noted, the terms "front", "rear", "left", "right", "up", and "down" are defined with respect to the rear seat 1. Moreover, the "width direction" is called a "left-right direction" as well.

The rear seat 1 includes a seat cushion 2 for allowing an occupant to sit thereon and a seatback 3 for supporting the back of the occupant. The seatback 3 has headrests integrated therewith for supporting the head of the occupant.

The seat cushion 2 includes a seat surface portion having three sitting regions of a right region 2a, a center region 2b, and a left region 2c. Each of the regions 2a to 2c has an enough width to allow an adult occupant to sit thereon.

Buckles 4a, 4b, 4c to be used respectively by occupants sitting on the right region 2a, the center region 2b, and the left region 2c are visibly provided on the seat surface portion of the seat cushion 2. Specifically, the right buckle 4a for the right occupant and the center buckle 4b for the center occupant are arranged between the right region 2a and the center region 2b, and the left buckle 4c for the left occupant is arranged between the center region 2b and the left region 2c. Each of the buckles 4a, 4b, and 4c is to be engaged with a tongue plate of an associated seatbelt.

Each of the buckles 4a to 4c is fixedly attached to a floor panel of the automobile and is exposed on the seat surface portion of the seat cushion 2 through a buckle guiding part being a hole part penetrating the seat cushion 2 in the up-down direction. Specifically, the right buckle 4a and the center buckle 4b are exposed on the seat surface portion through a common buckle guiding part (right buckle guiding part 6a) defined between the right region 2a and the center region 2b. By contrast, the left buckle 4c is exposed on the seat surface portion through a dedicated buckle guiding part (left buckle guiding part 6b) defined between the center region 2b and the left region 2c.

The center region 2b of the seat cushion 2 is provided with a buckle accommodator 5 at a right end thereof. The buckle accommodator 5 has a recess shape in the center region 2b for accommodating the center buckle 4b. As shown in Fig. 2, the buckle accommodator 5 has a slender rectangle shape which is long in a width direction of the seat cushion 2 in a plan view and opens on one short side (rightward) thereof to communicate with the right buckle guiding part 6a. Specifically, in a case of no occupant on the center region 2b, the center buckle 4b is fitted in the buckle accommodator 5 to be accommodatable in the seat cushion 2 without protruding out of the seat surface portion as shown in Fig. 1.

### Details of Structure of Buckle Accommodator 5

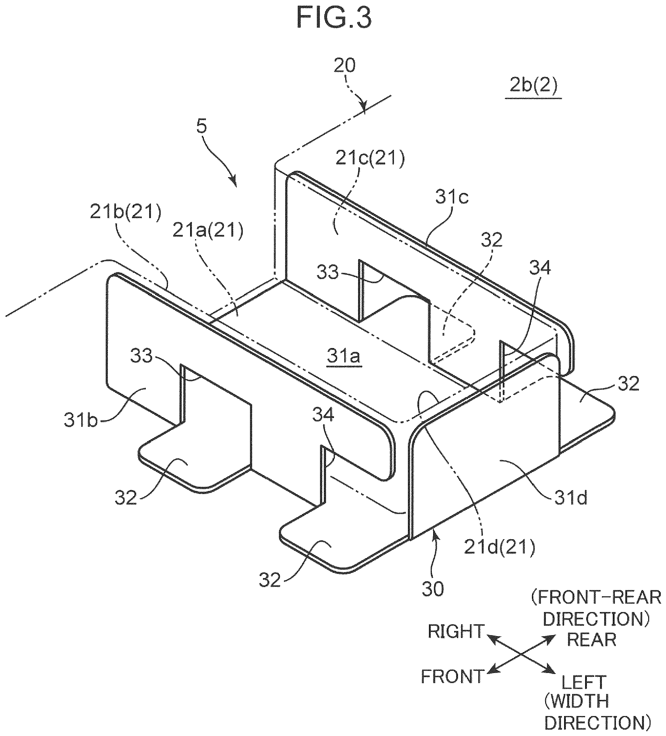

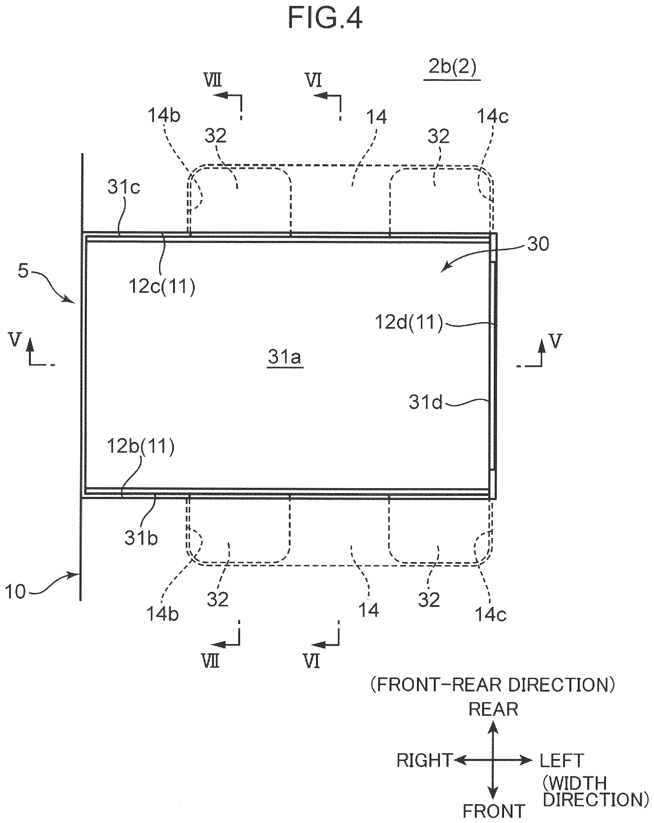

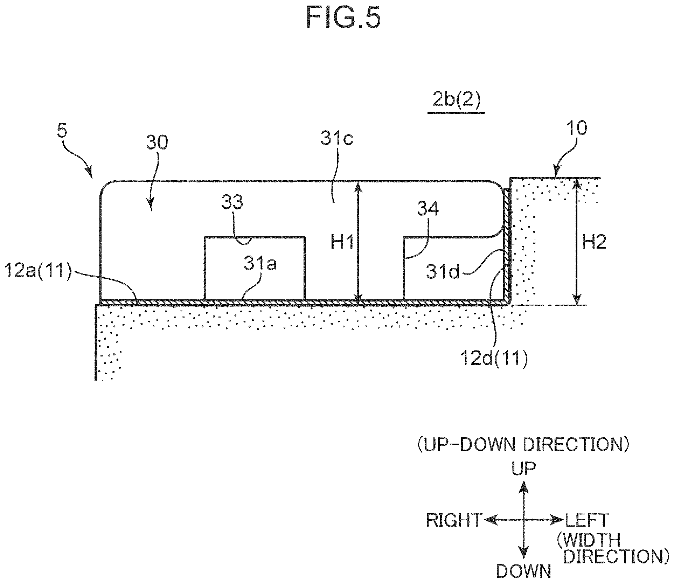

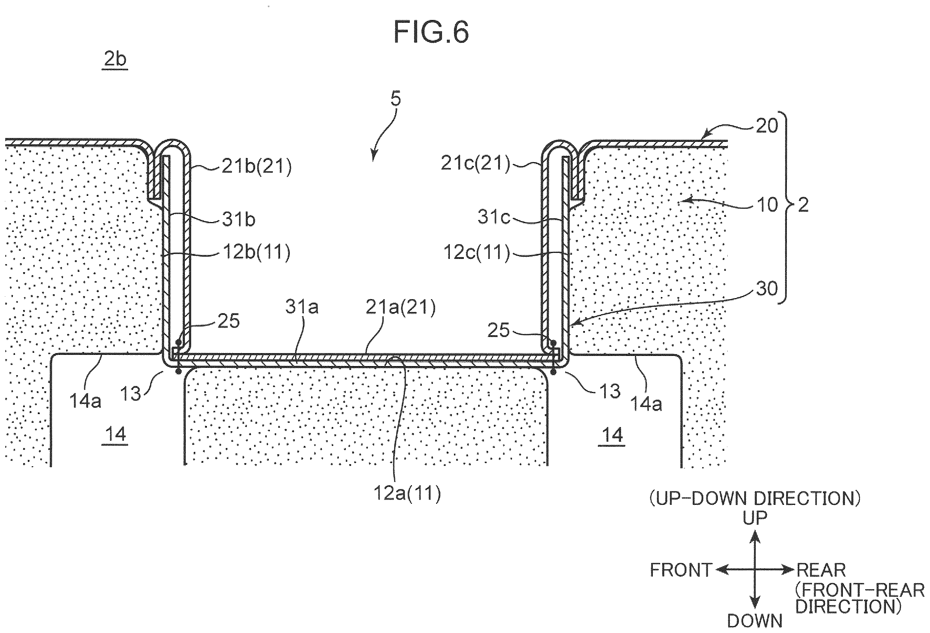

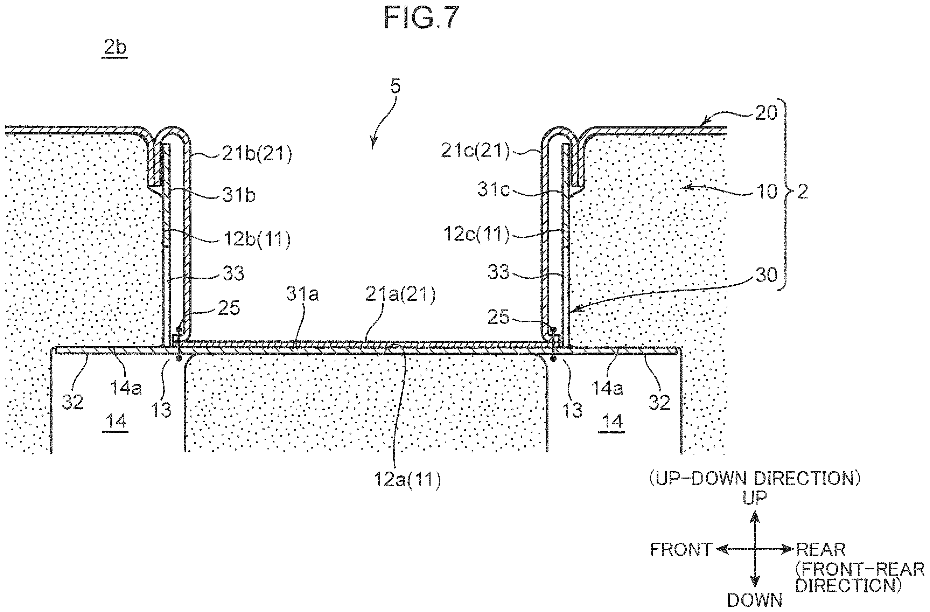

Fig. 3 is a perspective view of a main portion showing the buckle accommodator. Fig. 4 is a plan view of the main portion showing the buckle accommodator, excluding illustration of a trim. Fig. 5 is a cross-sectional view taken along the line V-V in Fig. 4. Fig. 6 is a cross-sectional view of the buckle accommodator (including the trim) taken along the line VI-VI in Fig. 4. Fig. 7 is a cross-sectional view of the buckle accommodator (including the trim) taken along the line VII-VII in Fig. 4.

The seat cushion 2 includes: an unillustrated frame member supported by the floor panel of the automobile; a cushion pad 10 for covering the frame member; a trim 20 entirely covering a surface of the cushion pad 10; and a support member 30 disposed between the cushion pad 10 and the trim 20.

The cushion pad 10 is made of urethane resin foam molded member. As shown in Fig. 4 to Fig. 7, the cushion pad 10 has a recess part 11 agreeing with the shape of the buckle accommodator 5 formed on the left end of the center region 2b of the seat cushion 2. The recess part 11 has an inner bottom surface 12a, a front side surface 12b, a rear side surface 12c, and a left side surface 12d, and further has the slender rectangle shape which is long in the width direction of the seat cushion 2 in the plan view and opens rightward as described above.

The trim 20 is a sheet-like member having pliability, and made of natural leather or synthetic leather in this example. The trim 20 has, in a portion thereof corresponding to the recess part 11 of the cushion pad 10, a three-dimensionally sewn section 21 that is three-dimensionally sewn along the recess part 11. Specifically, as shown in Fig. 3, the three-dimensionally sewn section 21 has a bottom part 21a, a front side part 21b, a rear side part 21c, and a left side part 21d respectively along the inner bottom surface 12a, the front side surface 12b, the rear side surface 12c, and the left side surface 12d of the recess part 11.

The support member 30 is disposed between the cushion pad 10 and the trim 20 in the buckle accommodator 5. As shown in Fig. 3 to Fig. 5, the support member 30 includes: a bottom support part 31a having a slender rectangular plate shape which is long in the left-right direction in the plan view along the inner bottom surface 12a of the recess part 11; a front side support part 31b having a plate shape, standing from a front edge of the bottom support part 31a, and extending in the left-right direction along the front side surface 12b of the recess part 11; a rear side support part 31c having a plate shape, standing from a rear edge of the bottom support part 31a, and extending in the left-right direction along the rear side surface 12c of the recess part 11; and a left side support part 31d standing from a left edge of the bottom support part 31a and extending in the front-rear direction along the left side surface 12d of the recess part 11.

Each of the front side support part 31b and the rear side support part 31c has an opening 33 located around the center thereof in the left-right direction. Each of the front side support part 31b and the rear side support part 31c further has a notch 34 at the left end thereof. The bottom support part 31a is provided with, along the front edge thereof, a pair of extension parts 32 extending frontward to be in front of the front side support part 31b respectively through the opening 33 and the notch 34. The bottom support part 31a is further provided with, along the rear edge thereof, another pair of extension parts 32 extending rearward to be in rear of the rear side support part 31c respectively through the opening 33 and the notch 34.

The bottom support part 31a, the front side support part 31b, the rear side support part 31c, the left side support part 31d, and each extension part 32 are formed into one body and made of material having higher stiffness than the trim 20, i.e., material having higher shape keeping performance. In this example, the body is made of PP (polypropylene) board. Schematically, a cut is made, for example, in one sheet of PP board along an outline of the bottom support part 31a, and a periphery of the cut is bent along the cut to be formed into the front side support part 31b, the rear side support part 31c, and the left side support part 31d. In this way, a whole of the support member 30 is formed into one body and made of the sheet of PP board.

As shown in Fig. 5, a height H1 of the support member 30, i.e., height from a bottom surface of the bottom support part 31a to an upper end of each of the side support parts 31b, 31c, 31d, is slightly smaller than a height H2 of each of the side surfaces 12b, 12c, 12d of the recess part 11 of the cushion pad 10, i.e., a height from the inner bottom surface 12a to an upper end of each of the side surfaces 12b, 12c, 12d. In the example, the height of the front side support part 31b is equal to that of the rear side support part 31c, and the height of the left side support part 31d is slightly smaller than those of the front side support part 31b and the rear side support part 31c. By contrast, the heights of the respective side surfaces 12b, 12c, 12d of the recess part 11 are equal to one another. The support member 30 has chamfered corners, specifically, each of the front side support part 31b, the rear side support part 31c, the left side support part 31d, and the extension part 32 has chamfered corners. Each corner of the support member 30 is configured to give no damage to the trim 20.

As shown in Figs. 6 and 7, the cushion pad 10 has hole parts 14 extending downward respectively on front and rear sides of the inner bottom surface 12a of the recess part 11. An opening 13 having a slit shape extends in the left-right direction (direction perpendicularly intersecting the paper in Fig. 6 and Fig. 7) in each of the boundary between the inner bottom surface 12a and the front side surface 12b and the boundary between the inner bottom surface 12a and the rear side surface 12c in the recess part 11 to allow an inside of the recess part 11 and the hole part 14 to communicate with each other. As shown in Fig. 7, the support member 30 is located inside the recess part 11 of the cushion pad 10 with each of the front and rear extension parts 32 placed in the corresponding hole part 14 through the opening 13.

The front side support part 31b of the support member 30 is in contact with the front side surface 12b of the recess part 11, and the rear side support part 31c is in contact with the rear side surface 12c of the recess part 11. In this manner, the support member 30 is positioned to the cushion pad 10 (recess part 11) in the front-rear direction.

Moreover, the bottom support part 31a of the support member 30 is in contact with the inner bottom surface 12a of the recess part 11, and an upper surface of each of the front and rear extension parts 32 in the corresponding hole part 14 is in contact with a top wall 14a of the hole part 14. In this manner, the support member 30 is positioned to be engaged with the cushion pad 10 (recess part 11) in the up-down direction.

As shown in Fig. 4, the right extension part 32 inserted in each hole part 14 is in contact with a right side wall 14b of the hole part 14, and the left extension part 32 inserted in the same manner is in contact with a left side wall 14c of the hole part 14. In this manner, the support member 30 is positioned to be engaged with the cushion pad 10 (recess part 11) in the left-right direction.

As described above, the support member 30 is stably held by the cushion pad 10 through the contact between the front side support part 31b and the front side surface 12b of the cushion pad 10 and the contact between rear side support part 31c and the rear side surface 12c of the cushion pad, and further through the engagement of the extension part 32 inserted in the opening 13 with the cushion pad 10. In the example, each of the top wall 14a, the right side wall 14b, and the left side wall 14c of the hole part 14 corresponds to the "wall being in contact with the extension part" in the present invention.

As shown in Fig. 7, the front and rear ends of the bottom part 21a of the trim 20 and the front and rear ends of the bottom support part 31a of the support member 30 are sewn with each other entirely in the left-right direction. Reference numeral 25 in the drawing denotes a relevant sewn portion. Owing to the sewing, the trim 20 and the support member 30 are integrated.

### Operational Effects

The rear seat 1 described heretofore includes the buckle accommodator 5 obtainable by covering the recess part 11 formed in the cushion pad 10 with the trim 20 three-dimensionally sewn along the inner surface of the recess part 11. On top of this, the support member 30 made of material (PP board) having higher stiffness than the trim 20 is disposed between the section (three-dimensionally sewn section 21) of the trim 20 extending along the inner surface of the recess part 11 and the recess part 11. The support member 30 includes, in addition to the bottom support part 31a having a plate shape along the inner bottom surface 12a of the recess part 11 of the cushion pad 10, the front side support part 31b, the rear side support part 31c, and the left side support part 31d each having the plate shape and respectively standing from the peripheral edges of the bottom support part 31a along the front side surface 12b, the rear side surface 12c, and the left side surface 12d of the recess part 11. Hence, a portion of the trim 20 (i.e., the bottom part 21a of the three-dimensionally sewn section 21 of the trim 20) defining the bottom part of the buckle accommodator 5, and inner side parts (i.e., the front side part 21b, the rear side part 21c, and the left side part 21d of the three-dimensionally sewn section 21 of the trim 20) therearound are kept flat without receiving an influence of deformation of the cushion pad 10. Further, the boundaries between the inner bottom surface 12a of the recess part 11 and each of the peripheral surfaces, i.e., the front side surface 12b, the rear side surface 12c, and the left side surface 12d, are unlikely to deform (unlikely to loose their shapes). In this respect, the bottom part 21a of the trim 20 and the inner side parts (i.e., the front side part 21b, the rear side part 21c, and the left side part 21d) therearound are easily kept flat. Accordingly, the rear seat 1 allows the buckle accommodator 5 thereof to look more attractive and have higher appearance quality than a buckle accommodator included in a conventional seat.

Meanwhile, if the buckle accommodator 5 has a wrinkle in its inner side part (defined by the front side part 21b, the rear side part 21c, and the left side part 21d of the trim 20), the center buckle 4b may be caught by the wrinkle and fail to suitably fit in the buckle accommodator 5. This may hinder the center buckle 4b to be smoothly accommodated in the buckle accommodator 5. In this embodiment, however, since the buckle accommodator 5 has the inner side part (defined by the front side part 21b, the rear side part 21c, and the left side part 21d of the trim 20) which easily keeps its surface flat, long term and favorable accommodation of the center buckle 4b in the buckle accommodator 5 can be achieved without aforementioned inconvenience.

Furthermore, the support member 30 is positioned in the front-rear direction through the contact between the front side support part 31b and the front side surface 12b of the recess part 11 and the contact between the rear side support part 31c and the rear side surface 12c of the recess part 11. In addition, in the support member 30, each extension part 32 located along the outer edge of the bottom support part 31a is in contact with the top wall 14a of the hole part 14 formed in the cushion pad 10 from below and is in contact with the right side wall 14b and the left side wall 14c of the hole part 14. In this manner, the support member 30 is positioned to the cushion pad 10 (recess part 11) in the up-down direction and the left-right direction. Accordingly, the rear seat 1 is advantageous in effectively suppressing shape loss of the buckle accommodator 5 attributed to deviation between the cushion pad 10 and the support member 30.

In particular, in the embodiment, the trim 20 and the support member 30 are sewn together to be integrated. Further, in this case, the front and rear ends of the bottom part 21a of the trim 20 and the front and rear ends of the bottom support part 31a of the support member 30 are sewn with each other entirely in the left-right direction. This structure can effectively prevent the trim 20 (three-dimensionally sewn section 21) from rising from the support member 30, and therefore more reliably suppress the shape loss of the buckle accommodator 5 attributed to the rise. Accordingly, the rear seat 1 achieves the improved appearance quality of the buckle accommodator 5 in this respect as well. The trim 20 and the support member 30 are attachable to the cushion pad 10 without difficulty while avoiding deviation between the support member 30 and the trim 20 by sewing the trim 20 and the support member 30 together in advance of the attachment thereof to the cushion pad 10. This is advantageous in improving the productivity of the rear seat 1 as well.

Each of the front side support part 31b, the rear side support part 31c, the left side support part 31d, and the extension part 32 of the support member 30 has a chamfered corner. Hence, damage to the trim 20 by each corner is suppressible. Accordingly, it is advantageous to suppress deterioration of the appearance quality of the buckle accommodator 5 due to such damage.

Besides, the height H1 of the support member 30, i.e., the height to the upper end of each of the side support parts 31b, 31c, 31d is slightly smaller than the height H2 of each of the side surfaces 12b, 12c, 12d of the recess part 11 of the cushion pad 10. This structure is advantageous in suppressing loss of ride comfortability of the occupant or good touch feeling without adverse feeling of something different or protrusion when the occupant touches the periphery of the buckle accommodator 5. This structure can further suppress rise of the trim 20 from the cushion pad 10 that is attributed to lifting by the side support parts 31b, 31c, 31d.

### Modifications

The rear seat 1 described heretofore represents an example of a preferable embodiment of the seat adopting the seat structure according to the present invention, and therefore, details of the structure of the rear seat are appropriately changeable without deviating the scope of the gist of the present invention. For instance, the configurations described below are adoptable.

(1) Regarding the sewing of the trim 20 and the support member 30 together, the front and rear ends of the bottom part 21a of the trim 20 and the front and rear ends of the bottom support part 31a of the support member 30 are sewn with each other entirely in the left-right direction in the embodiment. However, a specific sewing position is not limited thereto, and is appropriately changeable.

For instance, in addition to the sewing position in the embodiment, the left end of the bottom part 21a of the trim 20 and the left end of the bottom support part 31a of the support member 30 may be sewn together entirely in the front-rear direction. This configuration more reliably suppresses the rise of the trim 20 on the peripheral edge of the bottom support part 31a of the support member 30, and thus can further improve the appearance quality of the buckle accommodator 5.

(2) In the embodiment, the support member 30 is made of one sheet of PP board bent into the front side support part 31b, the rear side support part 31c, and the left side support part 31d. Accordingly, a whole of the support member 30 is formed into one body and made of the same material. However, the whole of the support member 30 may be formed into the one body and made of the same material by, for example, resin molding using a mold. Although not mentioned in particular in the embodiment, the support member 30 formed into the one body and made of the same material is producible without a step of adhesion, and therefore, this configuration of the support member 30 is advantageous in improvement of the productivity of the support member 30 and further in improvement of the productivity of the rear seat 1.

(3) Although the trim 20 is made of natural leather or synthetic leather in the embodiment, the trim 20 may be made of another material, e.g., fabric. Besides, although the support member 30 is made of PP board in the embodiment, the support member 30 may be made of another material except the PP board, as long as the material has higher stiffness, i.e., has higher shape keeping performance, than the trim 20. The above-described configurations can enjoy the same operational effect as that of the embodiment.

(4) In the embodiment, the height H1 of the support member 30, i.e., the height to the upper end of each of the side support parts 31b, 31c, 31d, is slightly smaller than the height H2 of each of the side surfaces 12b, 12c, 12d of the recess part 11 of the cushion pad 10. In other words, the upper end of each of the side support parts 31b, 31c, 31d of the support member 30 is required not to protrude upward from the recess part 11. Taking this into consideration, the height H1 of the support member 30 may be equal to the height H2 of each of the side surfaces 12b, 12c, 12d of the recess part 11.

The present invention described heretofore will be summarized in the following manner.

The present invention relates to a seat structure including a buckle accommodator for accommodating a buckle of a seatbelt, the buckle accommodator having a recess shape formed in a seat surface portion of a seat cushion. The seat structure includes: a cushion pad having a recess part agreeing with the shape of the buckle accommodator; a trim covering a surface of the cushion pad and having a three-dimensionally sewn section along an inner surface of the recess part; and a support member located between the cushion pad and the trim and inside the recess part of the cushion pad. The support member includes a bottom support part having a plate shape along an inner bottom surface of the recess part and a side support part having a plate shape and standing from a peripheral edge of the bottom support part along an inner side surface of the recess part, a whole of the support member being made of material having higher stiffness than the trim.

In the seat structure, the support member made of material having higher stiffness, i.e., higher shape keeping performance, than the trim is disposed between the recess part of the cushion pad forming the buckle accommodator and the trim extending along the inner surface of the recess part. The support member has the bottom support part having a plate shape along an inner bottom surface of the recess part of the cushion pad and the side support part having the plate shape and standing from the peripheral edge of the bottom support part along the inner side surface of the recess part. Hence, in addition to the portion of the trim along the bottom part of the buckle accommodator, the inner side part therearound is less likely to receive an influence of deformation of the cushion pad and thus is kept flat. The seat structure having this configuration can improve the appearance quality of the buckle accommodator and further improve the appearance quality of the rear seat.

In the seat structure, preferably, the support member has an extension part extending outward of the side support part from the peripheral edge of the bottom support part, the extension part being engaged with the cushion pad so that the support member is held by the cushion pad.

This structure can suppress occurrence of shape loss of the buckle accommodator attributed to deviation between the cushion pad and the support member.

In this case, the cushion pad preferably has a wall being in contact with the extension part in at least one of an up-down direction, a front-rear direction, and a left-right direction of the seat cushion.

This structure can appropriately position the support member to the cushion pad via the extension part in at least one of the up-down direction, the front-rear direction, and the left-right direction.

In the seat structure, the support member preferably has a chamfered corner.

According to this structure, damage to the trim by the corner of the support part is suppressible.

Further, in the seat structure, the support member is preferably sewn with the trim.

This structure can prevent the deviation between the support member and the trim, and prevent the rise of the trim from the support member. Moreover, the support member and the trim are easily attachable to the cushion pad without any difficulty while avoiding deviation between the support member and the trim by sewing the support member and the trim together in advance of the attachment to the cushion pad.

Further, in the seat structure, the whole of the support member is preferably formed into one body and made of the same material.

This structure succeeds in production without a step of adhesion, and hence achieves good productivity of the support member and contributes to improvement of the productivity of the seat including the buckle accommodator having high appearance quality as described above.

Further, in the seat structure, the side support part preferably has a height equal to or smaller than a height of the inner side surface of the recess part.

This seat structure can suppress loss of good touch feeling or sitting comfortability of the occupant without adverse feeling of something different or protrusion when the occupant touches the periphery of the buckle accommodator. This structure can further suppress rise of the trim from the cushion pad that is attributed to lifting by the side support part.

## Claims

1. A seat structure including a buckle accommodator for accommodating a buckle of a seatbelt, the buckle accommodator having a recess shape formed in a seat surface portion of a seat cushion, the seat structure comprising:
a cushion pad having a recess part agreeing with the shape of the buckle accommodator;
a trim covering a surface of the cushion pad and having a three-dimensionally sewn section along an inner surface of the recess part; and
a support member located between the cushion pad and the trim and inside the recess part of the cushion pad, wherein
the support member includes a bottom support part having a plate shape along an inner bottom surface of the recess part and a side support part having a plate shape and standing from a peripheral edge of the bottom support part along an inner side surface of the recess part, a whole of the support member being made of material having higher stiffness than the trim.

2. The seat structure according to claim 1, wherein the support member has an extension part extending outward of the side support part from the peripheral edge of the bottom support part, the extension part being engaged with the cushion pad so that the support member is held by the cushion pad.

3. The seat structure according to claim 2, wherein the cushion pad has a wall being in contact with the extension part in at least one of an up-down direction, a front-rear direction, and a left-right direction of the seat cushion.

4. The seat structure according to any one of claims 1 to 3, wherein the support member has a chamfered corner.

5. The seat structure according to any one of claims 1 to 4, wherein the support member is sewn with the trim.

6. The seat structure according to any one of claims 1 to 5, wherein the whole of the support member is formed into one body and made of the same material.

7. The seat structure according to any one of claims 1 to 6, wherein the side support part has a height equal to or smaller than a height of the inner side surface of the recess part.
